# EUROPEAN PATENT APPLICATION

(11) **EP 3 229 149 A1**
(43) Date of publication of application: **11.10.2017**
(21) Application number: 15865135.6
(22) Date of filing: 26.11.2015
(51) Int. Cl.: G06F 17/30, H04L 29/06

(54) **METHOD, APPARATUS AND SYSTEM FOR DETERMINING EXISTENCE OF DATA FILE**

(30) Priority: 02.12.2014 CN 201410720816
(71) Applicant: Alibaba Group Holding Limited, Grand Cayman (KY)
(72) Inventor: WANG, Hanzhang, Hangzhou Zhejiang 311121 (CN)
(74) Representative: Boult Wade Tennant
(86) International application number: PCT/CN2015/095589
(87) International publication number: WO 2016/086789

(57) **Abstract**

Embodiments of the disclosure provide a method, apparatus, and system for determining the existence of a data file. The method includes: sending, by a first network node, a request to a second network node, the request including a first identifier of a data file; searching for, by the second network node, a local matching data file according to the first identifier of the data file; selecting a file block from the local matching data file, and acquiring a first position of the selected file block; and sending the first position to the first network node; selecting, by the first network node, a file block at a corresponding position from the data file according to the first position, and calculating a second characteristic value of the selected file block; and sending the second characteristic value of the file block to the second network node; and determining, by the second network node, whether the second characteristic value matches a third characteristic value of the selected file block in the local matching data file, and determining whether the data file exists based on the matching result.

## Description

### CROSS-REFERENCE TO RELATED APPLICATIONS

This application claims the benefit of priority of Chinese Patent Application No. 201410720816.1, filed on December 2, 2014 and PCT Application No. PCT/CN2015/095589, filed on November 26, 2015, which are incorporated herein in their entirety by reference.

### BACKGROUND

### Technical Field

The present disclosure relates to the field of communications technologies, and in particular, to a method, apparatus, and system for determining the existence of a data file.

### Description of the Related Art

Data files often need to be transmitted between network nodes in the field of data communications.

In some scenarios, it is required to determine whether a data file to be transmitted is already stored at a network node. For example, a network node A needs to transmit a data file to a network node B, yet this data file is already stored in the network node B. It is therefore unnecessary to upload the data file from the network node A.

In the aforementioned scenario, repeated transmission will waste network resources. Accordingly, using current techniques, it is determines whether a data file to be transmitted is already stored in a network node. The steps of data transmission between the two network nodes are:
1) the network node A sends a request for transmitting a data file to the network node B, where the request carries an overall characteristic value of the data file;
2) after acquiring the overall characteristic value of the data file, the network node B queries whether the overall characteristic value exists locally to determine whether the data file the network node A requests to transmit exists; and
3) when the network node B determines that the data file the network node A requests to upload exists, a rapid transmission policy is started. For example, the network node B informs the network node A of successful transmission. When the network node B determines that the data file the network node A requests to transmit does not exist, the network node A enters a Create Upload scenario.

In the aforementioned method for determining the existence of a data file in the current techniques, the used overall characteristic value of the data file is generally an overall MD5 value of the data file or an overall SHA value of the data file.

During implementation of the embodiments disclosed herein, the inventor has found that current techniques have at least the following problem.

Due to the weak anti-collision performance of an MD5 value frequently used in current techniques, two different data files easily generate the same MD5 value. Moreover, with deepened understanding of MD5, people are likely to construct an MD5 value intentionally. The SHA algorithm has similar problems. As a result, whether a data file exists cannot be accurately determined using current techniques.

### BRIEF SUMMARY

The objective of the disclosed embodiments is to provide a method, apparatus, and system for determining the existence of a data file, thereby more accurately determining whether a file exists.

In order to solve the aforementioned technical problems, a method, apparatus, and system for determining the existence of a data file are provided in the following embodiments.

A method for determining the existence of a data file includes: sending, by a first network node, a request for a data file to a second network node, the request including a first identifier of the data file; searching for, by the second network node, a local matching data file according to the first identifier of the data file; selecting a file block from the matching data file, and acquiring a first position of the selected file block; sending, by the second network node, the first position to the first network node; selecting, by the first network node, a file block at a corresponding position from the data file according to the first position, and calculating a second characteristic value of the selected file block; sending, by the first network node, the second characteristic value of the file block to the second network node; and determining, by the second network node, whether the second characteristic value matches a third characteristic value of the selected file block in the local matching data file, and determining whether the data file exists based on the matching result.

A method for determining the existence of a data file includes: sending a request for a data file to a second network node, the request including a first identifier of the data file; receiving a first position sent by the second network node; selecting a file block at a corresponding position from the data file according to the first position, and calculating a second characteristic value of the selected file block; and sending the second characteristic value to the second network node.

A method for determining the existence of a data file includes: receiving a request for a data file sent by a first network node, the request including a first identifier of the data file; searching for a local matching data file according to the first identifier of the data file; selecting a file block from the matching data file, and acquiring a first position of the selected file block; sending the first position to the first network node; receiving a second characteristic value of a file block sent by the first network node; and determining whether the second characteristic value matches a third characteristic value of the file block selected from the local matching data file, and determining whether the data file exists based on the matching result.

A method for determining the existence of a data file includes: sending, by a third network node, a request for a data file to a fourth network node, the request including a first identifier of the data file, a first position of a file block in the data file, and a second characteristic value corresponding to the file block at the first position; searching for, by the fourth network node, a local matching data file according to the first identifier of the data file; calculating, by the fourth network node, a third characteristic value of a file block at a corresponding position in the matching data file according to information of the first position; and determining, by the fourth network node, whether the second characteristic value matches the third characteristic value of the file block at the corresponding position, and determining whether the data file exists based on the matching result.

A method for determining the existence of a data file includes: sending a request for a data file to a fourth network node, the request including a first identifier of the data file, a first position of a file block in the data file, and a second characteristic value corresponding to the file block at the first position.

A method for determining the existence of a data file includes: receiving a request for a data file, the request including a first identifier of the data file, a first position of a file block in the data file, and a second characteristic value corresponding to the file block at the first position; searching for a local matching data file according to the first identifier of the data file; obtaining, from the matching data file, a third characteristic value of a file block at a corresponding position according to information of the first position; and determining whether the second characteristic value matches the third characteristic value of the file block at the corresponding position, and determining whether the data file exists based on the matching result.

A system for determining the existence of a data file includes: a first network node, configured to send a request for a data file to a second network node, the request including a first identifier of the data file; select, according to a first position of a file block sent by the second network node, a file block at a corresponding position from the data file to be transmitted, and calculate a second characteristic value of the selected file block; and send the second characteristic value of the file block to the second network node; and the second network node, configured to search for a local matching data file according to the first identifier of the data file in the request sent by the first network node, select a file block from the matching data file, and acquire a first position of the selected file block; send the first position to the first network node; and determine, according to the second characteristic value sent by the first network node, whether the second characteristic value matches a third characteristic value of the file block selected from the local matching data file, and determine whether the data file exists based on the matching result.

An apparatus for determining the existence of a data file includes: a first request unit, configured to send a request for a data file to a second network node, the request including a first identifier of the data file; a first position receiving unit, configured to receive a first position sent by the second network node; a second characteristic value acquisition unit, configured to select a file block at a corresponding position from the data file according to the first position, and calculate a second characteristic value of the selected file block; and a second characteristic value sending unit, configured to send the second characteristic value to the second network node.

An apparatus for determining the existence of a data file includes: a first request receiving unit, configured to receive a request for a data file sent by a first network node, the request including a first identifier of the data file; a first matching unit, configured to search for a local matching data file based on the first identifier of the data file; a first position acquisition unit, configured to select a file block from the matching data file, and acquire a first position of the selected file block; a first position sending unit, configured to send first positions of all the selected file blocks to the first network node; a second characteristic value receiving unit, configured to receive a second characteristic value of a file block sent by the first network node; and a first data file existence determining unit, configured to determine whether the second characteristic value matches a third characteristic value of the file block selected from the local matching data file, and determine whether the data file exists based on the matching result.

A system for determining the existence of a data file includes: a third network node, configured to send a request for a data file to a fourth network node, the request including a first identifier of the data file, a first position of a file block in the data file, and a second characteristic value corresponding to the file block at the first position; and the fourth network node, configured to search for a local matching data file according to the first identifier of the data file; then obtain a third characteristic value of a file block at a corresponding position in the matching data file according to the first position; and determine whether the second characteristic value matches the third characteristic value of the file block at the corresponding position, and determine whether the data file exists based on the matching result.

An apparatus for determining the existence of a data file includes: a second request unit, configured to send a request for a data file to a fourth network node, the request including a first identifier of the data file, a first position of a file block in the data file, and a second characteristic value corresponding to the file block at the first position.

An apparatus for determining the existence of a data file includes: a second request receiving unit, configured to receive a request for a data file, the request including a first identifier of the data file, a first position of a file block in the data file, and a second characteristic value corresponding to the file block at the first position; a second matching unit, configured to search for a local matching data file based on the first identifier of the data file; a third characteristic value acquisition unit, configured to obtain a third characteristic value of a file block at a corresponding position in the matching data file according to the first position; and a second data file existence determining unit, configured to determine whether the second characteristic value matches the third characteristic value of the file block at the corresponding position, and determine whether the data file exists based on the matching result.

It can be seen from the above technical solutions provided in the embodiments of the disclosure that matching is performed for a first identifier of a data file to be searched; and then a third characteristic value of a file block corresponding to the first position is selected from a matching data file for further matching with a second characteristic value of a file block; even if the first identifier may have a collision, i.e., the same first identifier as that of the data file to be searched is forged, the probability of having a collision again in the colliding data file and painstakingly forging the same characteristic value of file blocks is greatly reduced. Moreover, a first position of a file block is unpredictable, so the probability of successfully forging position information and corresponding characteristic values of all selected file blocks is extremely low. Therefore, whether the data file already exists can be accurately determined. As compared with current techniques, the accuracy of determining the existence of a data file is greatly improved.

### BRIEF DESCRIPTION OF THE DRAWINGS

In order to illustrate the technical solutions in the embodiments of the present disclosure more clearly, the drawings used in the description of the embodiments will be introduced briefly below. The drawings described below are merely some embodiments disclosed, and those of ordinary skill in the art can obtain other drawings according to these drawings without making creative efforts.

FIG. 1 is a flow diagram of a first embodiment of a method for determining the existence of a data file in the present disclosure.
FIG. 2 is a flow diagram of a second embodiment of a method for determining the existence of a data file in the present disclosure.
FIG. 3 is a flow diagram of a third embodiment of a method for determining the existence of a data file in the present disclosure.
FIG. 4 is a flow diagram of a fourth embodiment of a method for determining the existence of a data file in the present disclosure.
FIG. 5 is a flow diagram of a fifth embodiment of a method for determining the existence of a data file in the present disclosure.
FIG. 6 is a flow diagram of a sixth embodiment of a method for determining the existence of a data file in the present disclosure.
FIG. 7 is a flow diagram of an eighth embodiment of a method for determining the existence of a data file in the present disclosure.
FIG. 8 is a flow diagram of a ninth embodiment of a method for determining the existence of a data file in the present disclosure.
FIG. 9 is a flow diagram of a tenth embodiment of a method for determining the existence of a data file in the present disclosure.
FIG. 10 is a schematic diagram of a first embodiment of a system for determining the existence of a data file in the present disclosure.
FIG. 11 is a schematic diagram of a first embodiment of an apparatus for determining the existence of a data file in the present disclosure.
FIG. 12 is a schematic diagram of a second embodiment of an apparatus for determining the existence of a data file in the present disclosure.
FIG. 13 is a schematic diagram of a second embodiment of a system for determining the existence of a data file in the present disclosure.
FIG. 14 is a schematic diagram of a fourth embodiment of an apparatus for determining the existence of a data file in the present disclosure.

### DETAILED DESCRIPTION

Embodiments of the present disclosure provide a method, apparatus, and system for determining the existence of a data file.

To enable those skilled in the art to better understand the technical solutions in the present disclosure, the technical solutions in the embodiments of the present disclosure will be described clearly and completely below with reference to the drawings. The described embodiments are merely some, rather than all of the embodiments of the present disclosure. On the basis of the embodiments disclosed herein, all other embodiments obtained by those of ordinary skill in the art without making creative efforts fall within the scope of the present disclosure.

The specific implementation of the embodiments of the disclosure is illustrated in detail below with several specific examples.

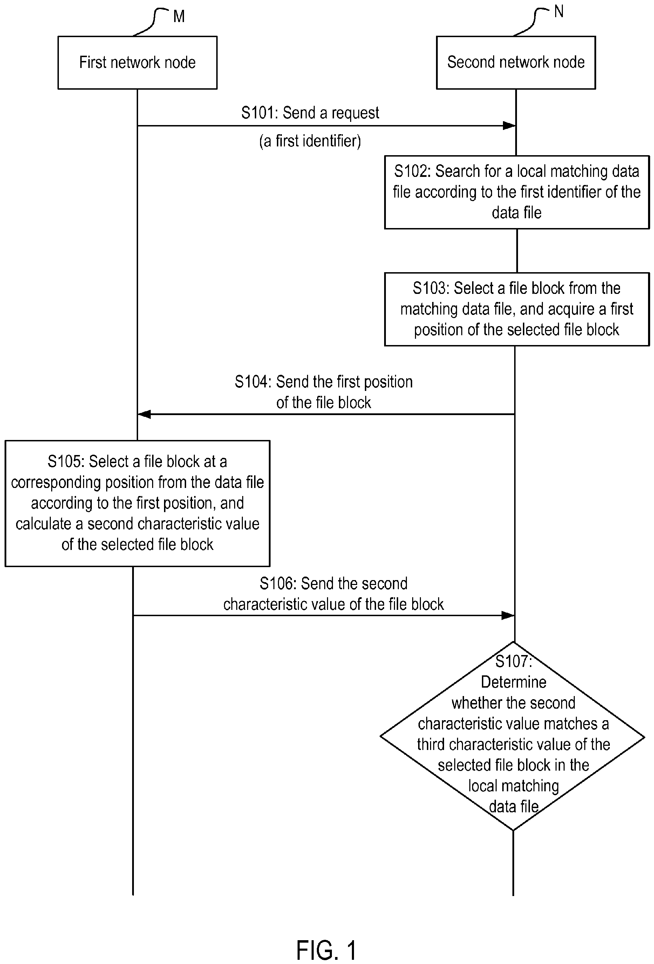

A first embodiment of a method for determining the existence of a data file in the present disclosure is introduced below. With reference to FIG. 1, this embodiment includes the following steps.

**S101:** A first network node M sends a request for a data file to a second network node N, the request including a first identifier of the data file.

The first identifier here may be at least one of a file name, a file size, and a first characteristic value, and in one embodiment, includes at least the first characteristic value. The first characteristic value refers to an overall characteristic value of the data file. In one embodiment, the characteristic value may be a Message Digest 5 (MD5) value.

In practical applications, before sending a request for a data file to the second network node N, the first network node M needs to calculate a first characteristic value of the data file, namely, an overall characteristic value of the data file. The overall characteristic value of the data file that is calculated by the first network node M may be of the same type as that of characteristic values of data files stored in the second network node N, or may be other selected characteristic values.

The selection and use of a characteristic value of the same type as that of characteristic values of data files stored in the second network node N can prevent the second network node N from recalculating new characteristic values for stored data due to the need of switching to other characteristic values used by the first network node M.

In addition, it should be further noted that the characteristic value in the embodiments of the present disclosure is not limited to an MD5 value, and may also be other forms, for example, a secure hash algorithm (SHA) value, in practice, and the disclosed embodiments are not limited thereto.

**S102:** The second network node N searches for a local matching data file according to the first identifier of the data file.

When the second network node N receives the first identifier of the data file sent by the first network node M, the second network node N acquires first identifiers of local data files, wherein the first identifiers may be acquired by calculation, or may be obtained by searching for relevant information of locally stored data files. Then, a search for a local data file matching the first identifier is conducted.

In some embodiments, when a matching data file cannot be found, the second network node N can determine that the data file to be transmitted by the first network node M does not exist locally, and the second network node N may return information indicating that the data file does not exist to the first network node M.

**S103:** Select a file block from the matching data file, and acquire a first position of the selected file block.

In some embodiments, when the second network node N finds a matching data file locally, if there is only one matching data file, it is only required to acquire a file block from this matching data file, and when there are multiple matching data files, it is required to select a file block from each matching data file. There may be one file block or multiple file blocks; the selection of the file block may be designated or performed using a random algorithm. Then, a first position of the selected file block is acquired. The first position here may be a starting position of the file block in the data file to which the file block belongs and a file block length, or may be a starting position and an ending position in the data file to which the file block belongs, and when multiple file blocks are selected, the lengths of the multiple file blocks may be the same or different.

Further, in a distributed storage scenario, a data file is divided into blocks and stored in the second network node N in the form of file blocks, and all file blocks, except the last file block, have the same size, and the size of the last file block is required to be less than or equal to that of the other file blocks. The second network node N stores relevant information of a stored data file, for example, a file name, an overall characteristic value, a file size, and a file structure table of the data file, where the file structure table sequentially stores all file block structure tables of the data file, and each file block structure table includes: a file block identifier, a preceding file block identifier, a succeeding file block identifier, a file block starting position, a file block length, and a file block characteristic value.

In addition, when the first position of the file block is obtained by searching for relevant information of data files stored locally in the second network node N, the first position of the file block needs to match a first position stored locally in the second network node N.
**S104:** The second network node N sends the first position to the first network node M.
**S105:** The first network node M selects a file block at a corresponding position from the data file according to the first position, and calculates a second characteristic value of the selected file block.

In practice, the second characteristic value of the file block here is the same kind of characteristic value as an overall characteristic value of a data file where the file block is located, which may be an MD5 value, or may be other forms, for example, an SHA value, and the disclosed embodiments are not limited thereto.
**S106:** The first network node M sends the second characteristic value of the file block to the second network node N.
**S107:** The second network node N determines whether the second characteristic value matches a third characteristic value of the selected file block in the local matching data file, and determines whether the data file exists based on the matching result.

In one embodiment, the second network node N may obtain the third characteristic value of the selected file block by calculation, or may obtain the third characteristic value of the selected file block by searching for relevant information of data files stored locally in the second network node N. After receiving the second characteristic value returned by the first network node M, the second network node N matches the returned second characteristic value with the third characteristic value of the selected file block.

When only one file block needs to be matched, it is only required to determine whether a second characteristic value of the file block matches a third characteristic value of a corresponding selected file block in the local matching data file. If the second characteristic value matches the third characteristic value, it is confirmed that the data file exists, and if the second characteristic value does not match the third characteristic value, it is confirmed that the data file does not exist.

Further, when multiple file blocks need to be matched, the second network node N needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.

Further, the second network node N returns information indicating whether the data file exists to the first network node M.

It can be seen that according to the technical solution in the embodiments described above, matching is performed for a first identifier of a data file to be searched; then, a first position of a file block is selected from a matching data file; and a second characteristic value at a first position in the data file to be searched is further matched with a third characteristic value at a corresponding position in a network node used to find out whether the data file exists. Even if the first identifier may have a collision, i.e., the same first identifier as that of the data file to be searched for is forged, the probability of having a collision again in the colliding data file and painstakingly forging the same characteristic value of file blocks is greatly reduced. Moreover, a first position of a file block is unpredictable, so the probability of successfully forging position information and corresponding characteristic values of all selected file blocks is extremely low, and therefore, whether the data file to be searched for exists can be accurately determined. As compared with current techniques, the accuracy of determining the existence of a data file is greatly improved.

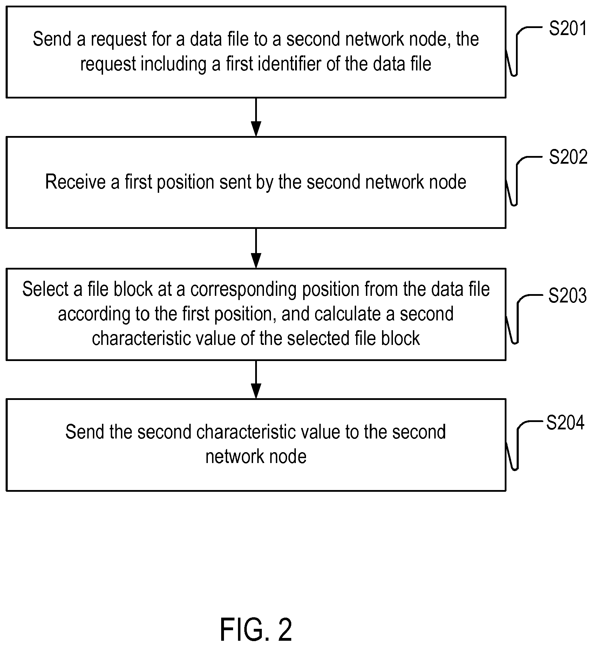

Focused on the first network node, the aforementioned first method embodiment may be described in a second method embodiment that, with reference to FIG. 2, specifically includes the following steps.
**S201:** Send a request for a data file to a second network node, the request including a first identifier of the data file.
**S202:** Receive a first position sent by the second network node.
**S203:** Select a file block at a corresponding position from the data file according to the first position, and calculate a second characteristic value of the selected file block.
**S204:** Send the second characteristic value to the second network node.

Further, information, returned by the second network node, indicating whether the data file exists is received.

It can be seen that according to the technical solution in the embodiments described above, matching is performed for a first identifier of a data file to be searched; then, a first position of a file block selected from a matching data file is obtained; a second characteristic value corresponding to a file block at a first position in the data file to be searched is obtained; and further matching is performed, so that whether the data file to be searched for exists can be accurately determined. As compared with current techniques, the accuracy of determining the existence of a data file is greatly improved.

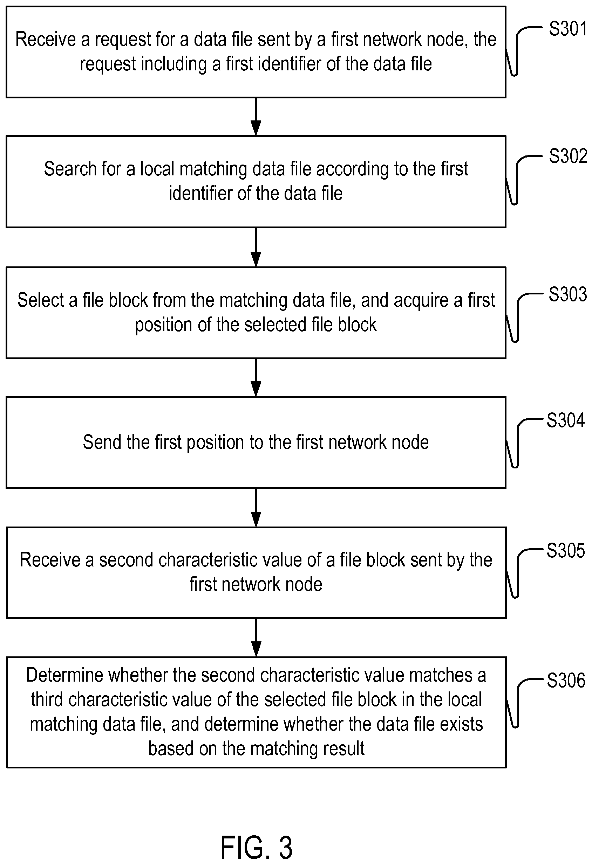

Focused on the second network node, the aforementioned first method embodiment may be described with respect to a third method embodiment that, with reference to FIG. 3, specifically includes the following steps.
**S301:** Receive a request for a data file sent by a first network node, the request including a first identifier of the data file.
**S302:** Search for a local matching data file according to the first identifier of the data file.
**S303:** Select a file block from the matching data file, and acquire a first position of the selected file block.
**S304:** Send the first position to the first network node.
**S305:** Receive a second characteristic value of a file block sent by the first network node.
**S306:** Determine whether the second characteristic value matches a third characteristic value of the selected file block in the local matching data file, and determine whether the data file exists based on the matching result.

Further, information indicating whether the data file exists is returned to the first network node.

It can be seen that according to the technical solution in the embodiments described above, matching is performed for a first identifier of a data file in a received request; then, first positions of the multiple file blocks are selected from a matching data file, and second characteristic values corresponding to first positions in the data file are further matched with third characteristic values at corresponding local positions, so that whether the data file to be searched for exists locally can be accurately determined. As compared with current techniques, the accuracy of determining the existence of a data file is greatly improved.

In some embodiments, for example, in a cloud storage scenario, a user needs to upload a data file to a cloud storage server, and if the data file to be uploaded by the user is already stored in the cloud server, the user does not need to repeatedly upload the data file-causing a waste of network resources-so it is required to first determine whether the data file already exists in the cloud storage server.

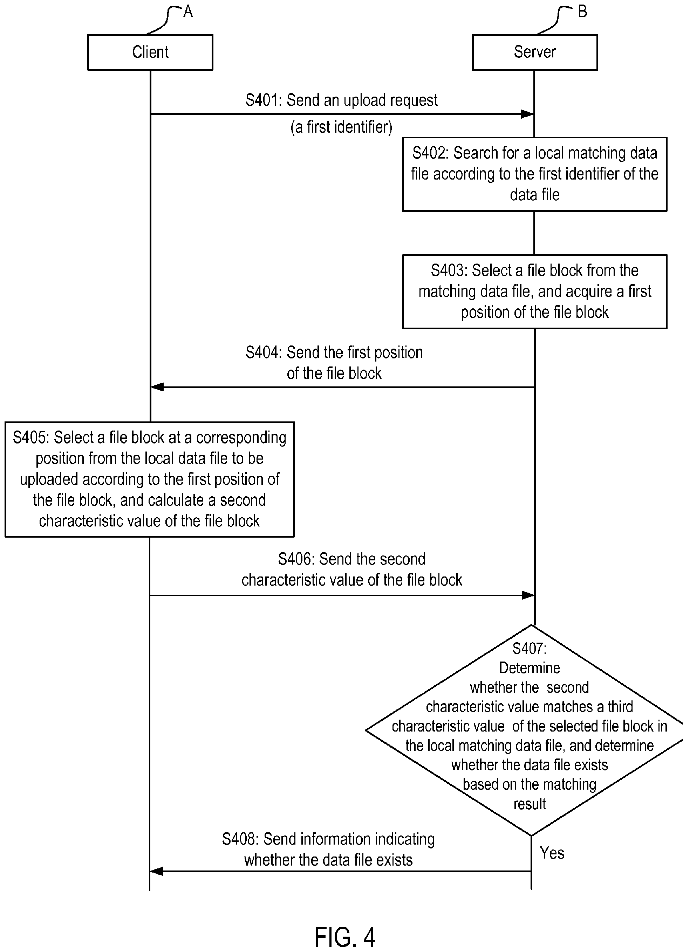

As applied to an upload scenario described above, the method described in connection with Figure 1 may be described with respect to a fourth method embodiment that, with reference to FIG. 4, specifically includes the following steps.
**S401:** A client A sends an upload request for a data file to a server B, the upload request including a first identifier of the data file.

The first identifier here may be at least one of a file name, a file size, and a first characteristic value, and in one embodiment, includes at least the first characteristic value. The first characteristic value refers to an overall characteristic value of the data file to be uploaded. In one embodiment, the characteristic value may be an MD5 value.

In some embodiments, before sending an upload request for a data file to the server B, the client A needs to calculate a first characteristic value of the data file, namely, an overall characteristic value of the data file. The overall characteristic value of the data file that is calculated by the client A may be of the same type as that of characteristic values of data files stored in the server B, or may be other selected characteristic values.

The selection and use of a characteristic value of the same type as that of characteristic values of data files stored in the server B can prevent the server B from recalculating new characteristic values for stored data due to the need of switching to other characteristic values used by the client A.
**S402:** The server B searches for a local matching data file according to the first identifier of the data file sent by the client A.

When the server B receives the first identifier of the data file sent by the client A, the server B acquires first identifiers of local data files, wherein the first identifiers may be acquired by calculation, or may be obtained by searching for relevant information of locally stored data files. Then, a search for a local data file matching the first identifier is conducted.

In some embodiments, when a matching data file cannot be found, the server B can determine that the data file to be transmitted by the client A does not exist locally, and the server B may return information indicating that the data file does not exist to the client A.
**S403:** The server B selects a file block from the matching data file, and acquires a first position of the file block.

In some embodiments, when the server B finds a matching data file locally, if there is only one matching data file, it is only required to acquire a file block from this matching data file, and when there are multiple matching data files, it is required to select a file block from each matching data file. There may be one file block or multiple file blocks; the selection of the file block may be designated or performed using a random algorithm. Then, a first position of the selected file block is acquired. The first position here may be a starting position of the file block in the data file to which the file block belongs and a file block length, or may be a starting position and an ending position in the data file to which the file block belongs, and the lengths of the multiple file blocks may be the same or different.

In addition, when the first position of the file block is obtained by searching for relevant information of data files stored locally in the server B, the first position of the file block needs to match a first position stored locally in the server B.
**S404:** The server B sends the first position of the file block of the matching data file to the client A.
**S405:** The client A selects a file block at a corresponding position from the local data file to be transmitted according to the first position of the file block sent by the server B, and calculates a second characteristic value of the file block.

In practice, the second characteristic value of the file block is the same kind of characteristic value as an overall characteristic value of a data file where the file block is located, which may be an MD5 value, or may be other forms, for example, an SHA value, and the disclosed embodiments are not limited thereto.
**S406:** The client A sends the second characteristic value of the file block to the server B.
**S407:** The server B determines whether the second characteristic value matches a third characteristic value of the selected file block in the local matching data file, and determines whether the data file exists based on the matching result.

In one embodiment, the server B may obtain the third characteristic value of the file block by calculation, or may obtain the third characteristic value of the file block by searching for relevant information of data files stored locally in the server B. The returned second characteristic value is matched with the third characteristic value of the selected file block. When only one file block needs to be matched, it is only required to determine whether a second characteristic value matches a third characteristic value of a selected file block in the local matching data file. If the second characteristic value matches the third characteristic value, it is confirmed that the data file exists, and if the second characteristic value does not match the third characteristic value, it is confirmed that the data file does not exist.

Further, when multiple file blocks need to be matched, the server B needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.
**S408:** The server B sends information indicating whether the data file exists to the client A.

Further, when the data file exists, it indicates that the upload is successful. When the data file does not exist, the flow enters a Create Upload scenario.

It can be seen that according to the technical solution in the embodiments described above, during uploading of a data file, matching is performed for a first identifier of the data file to be uploaded, then, a first position of a file block is selected from a matching data file, and a second characteristic value at a first position in the data file to be transmitted is further matched with a third characteristic value at a corresponding position in a network node the data file is to be transmitted to, so that even if the first identifier may have a collision, that is, a first identifier the same as that of the data file to be transmitted is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether the data file to be uploaded exists in the server can be accurately determined. The problem of loss of a data file caused by misjudgment that the data file already exists to cancel upload in an upload scenario due to the weak anti-collision performance of a characteristic value of the data file is effectively solved; as compared with current techniques, the accuracy of determining the existence of a data file is greatly improved, and the effectiveness and security of data file transmission are ensured.

In some embodiments, when a user needs to download a data file from a resource server, for a user having accelerated download rights, the resource server sends the data file to the user through an acceleration server, and therefore, it is required to first determine whether the acceleration server has the data file to be downloaded by the user. If yes, the acceleration server may directly send to the user the data file to be downloaded by the user without the need of sending the data file in the resource server to the acceleration server and then sending the data file by the acceleration server to the user.

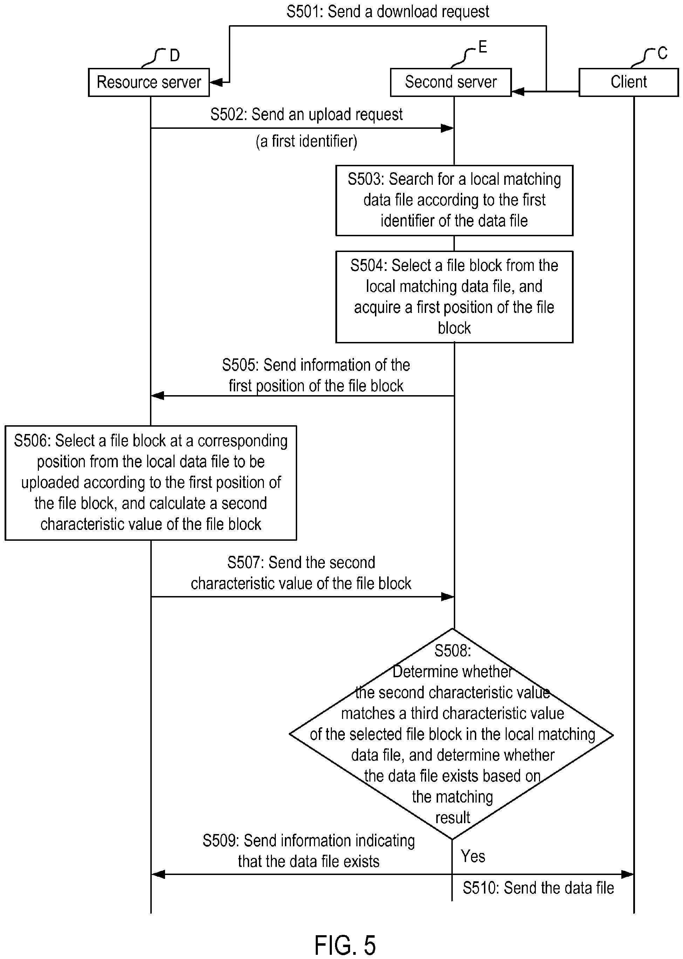

As applied to the download scenario described above, the method described in connection with Figure 1 may be described with respect to a fifth method embodiment that, with reference to FIG. 5, specifically includes the following steps.
**S501:** A client C sends a download request.

In some embodiments, a first server E is equivalent to an acceleration server of a resource server D, the client C may send a download request to the resource server D, or may send a download request to the first server E. Once the client C sends a download request to the resource server D or the first server E, the resource server D can identify a file to be downloaded by the client C and the method proceeds to S502.
**S502:** The resource server D sends an upload request for a data file to the first server E, the upload request including a first identifier of the data file.

The first identifier here may be at least one of a file name, a file size, and a first characteristic value, and in one embodiment, includes at least the first characteristic value. The first characteristic value refers to an overall characteristic value of the data file to be transmitted. In one embodiment, the characteristic value may be an MD5 value.

In some embodiments, before sending an upload request for a data file to the first server E, the resource server D needs to first obtain a first characteristic value of the data file, namely, an overall characteristic value of the data file, where the overall characteristic value may be obtained by calculation, or may be obtained directly from relevant information of locally stored data files. The overall characteristic value of the data file that is obtained by the resource server D may be of the same type as that of characteristic values of data files stored in the first server E, or may be other selected characteristic values.
**S503:** The first server E searches for a local matching data file according to the first identifier of the data file sent by the resource server D.

The first server E acquires first identifiers of local data files, where the first identifiers may be acquired by calculation, or may be obtained from relevant information of data files stored in the first server E. Then, a search for a local data file matching the first identifier is conducted.

In some embodiments, when a matching data file cannot be found, the first server E can determine that the data file does not exist locally, and the first server E returns information indicating that the data file does not exist to the resource server D.
**S504:** The first server E selects a file block from the matching data file, and acquires a first position of the file block.

In some embodiments, when the first server E finds a matching data file locally, if there is only one matching data file, it is only required to acquire a file block from this matching data file, and when there are multiple matching data files, it is required to select a file block from each matching data file. There may be one file block or multiple file blocks; the selection of the file block may be designated or performed using a random algorithm. Then, a first position of the selected file block is acquired. The first position here may be a starting position of the file block in the data file to which the file block belongs and a file block length, or may be a starting position and an ending position in the data file to which the file block belongs, and when multiple file blocks are selected, the lengths of the multiple file blocks may be the same or different.

In addition, when the first position of the file block is obtained by searching for relevant information of data files stored locally in the first server E, the first position of the file block needs to match a first position stored locally in the first server E.
**S505:** The first server E sends the first position of the file block of the matching data file to the resource server D.
**S506:** The resource server D selects a file block at a corresponding position from the local data file to be transmitted according to the first position of the file block sent by the first server E, and calculates a second characteristic value of the file block.

In practice, the second characteristic value of the file block is the same kind of characteristic value as an overall characteristic value of a data file where the file block is located, which may be an MD5 value, or may be other forms, for example, an SHA value, and the disclosed embodiments are not limited thereto.
**S507:** The resource server D sends the second characteristic value of the file block to the first server E.
**S508:** The first server E determines whether the second characteristic value matches a third characteristic value of the selected file block in the local matching data file, and determines whether the data file exists based on the matching result.

The first server E may acquire the third characteristic value of the local file block by calculation, or may obtain the third characteristic value from relevant information of data files stored in the first server E.

The returned second characteristic value is matched with the third characteristic value of the selected file block. When only one file block needs to be matched, it is only required to determine whether a second characteristic value of the file block matches a third characteristic value of a corresponding selected file block in the local matching data file. If the second characteristic value matches the third characteristic value, it is confirmed that the data file exists, and if the second characteristic value does not match the third characteristic value, it is confirmed that the data file does not exist.

Further, when multiple file blocks need to be matched, the first server E needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.

Further, if the first server E determines that the data file does not exist locally, the first server E returns information indicating that the data file does not exist to the resource server D.
**S509:** The first server E sends information indicating that the data file exists to the resource server D.
**S510:** The first server E sends the data file to the client C.

It can be seen that according to the technical solution in the embodiments described above, during downloading of a data file, matching is performed for a first identifier of a data file to be downloaded by a user, then, a first position of a file block is selected from a matching data file, and a second characteristic value corresponding to a file block at a first position in the data file to be transmitted is obtained and further matched with a third characteristic value of a corresponding local file block of the resource server, so that even if the first identifier may have a collision, that is, a first identifier the same as that of the data file to be transmitted is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether the data file to be transmitted exists can be accurately determined. The problem that a user downloads malicious software due to misjudgment that a data file is a data file to be downloaded by the user in a download scenario of the user is effectively solved. As compared with current techniques, the accuracy of determining the existence of a data file is greatly improved, and the effectiveness and security of data file transmission are ensured.

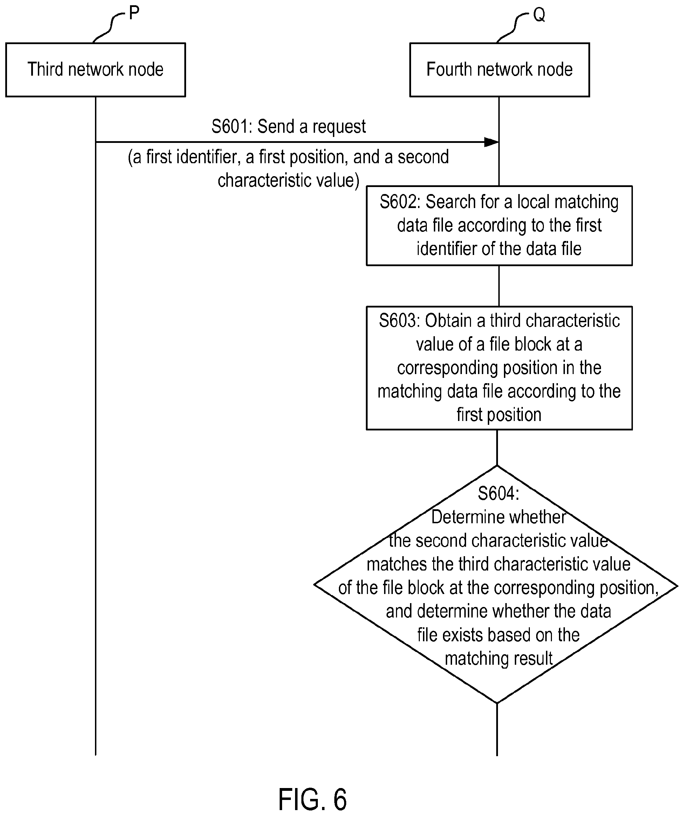

A sixth embodiment of a method for determining the existence of a data file is introduced below. With reference to FIG. 6, this embodiment includes the following steps.
**S601:** A third network node P send a request for a data file to a fourth network node Q, the request including a first identifier of the data file, a first position of a file block in the data file, and a second characteristic value corresponding to the file block at the first position.

The first identifier here may be at least one of a file name, a file size, and a first characteristic value, and in one embodiment, includes at least the first characteristic value. The first characteristic value refers to an overall characteristic value of the data file. The second characteristic value refers to a characteristic value of a file block in the data file. In one embodiment, the characteristic value may be an MD5 value.

Before sending a request for a data file to the fourth network node Q, the third network node P needs to calculate a first characteristic value and a second characteristic value of the data file. The characteristic values calculated by the third network node P may be of the same type as that of characteristic values of data files stored in the fourth network node Q, or may be other selected characteristic values.

The selection and use of a characteristic value of the same type as that of characteristic values of data files stored in the fourth network node Q can prevent the fourth network node Q from recalculating new characteristic values for stored data due to the need of switching to other characteristic values used by the third network node P.

In one embodiment, the first position of the file block may be a starting position and an ending position of the file block in the data file to which the file block belongs, or may be a starting position of the file block in the data file to which the file block belongs and a length of the file block. The first position of the file block may be obtained by designation, or may be obtained by calculation using a random algorithm.

The number of the first positions of the file blocks is greater than or equal to 1 and is less than or equal to the total number of blocks that the data file to be transmitted can be divided into. That is, the request may carry a first position of one file block or positions of multiple file blocks.
**S602:** The fourth network node Q searches for a local matching data file according to the first identifier of the data file.

When the fourth network node Q receives the first identifier of the data file sent by the third network node P, the fourth network node Q acquires first identifiers of local data files, wherein the first identifiers may be acquired by calculation, or may be obtained by searching for relevant information of locally stored data files. Then, a search for a local data file matching the first identifier is conducted.

In some embodiments, when a matching data file cannot be found, the fourth network node Q can determine that the data file to be transmitted by the third network node P does not exist locally, and the fourth network node Q may return information indicating that the data file does not exist to the third network node P.
**S603:** The fourth network node Q obtains a third characteristic value of a file block at a corresponding position in the matching data file according to the first position.

In some embodiments, when the fourth network node Q finds a matching data file locally, if there is only one matching data file, it is only required to find a first position from this matching data file, and acquire a third characteristic value of a file block at the first position by calculation. When there are multiple matching data files, it is required to find a first position from each matching data file and acquire third characteristic values of file blocks at the first positions.

Further, in a distributed storage scenario, a data file is divided into blocks and stored in the fourth network node Q in the form of file blocks, and all file blocks, except the last file block, have the same size, and the size of the last file block is required to be less than or equal to that of the other file blocks. The fourth network node Q stores relevant information of a stored data file, for example, a file name, an overall characteristic value, a file size, and a file structure table of the data file, where the file structure table sequentially stores all file block structure tables of the data file, and each file block structure table includes: a file block identifier, a preceding file block identifier, a succeeding file block identifier, a file block starting position, a file block length, and a file block characteristic value. When the characteristic value in the request is consistent with the characteristic values in the fourth network node Q, and the first position of the file block in the data file is consistent with length information of file blocks in the fourth network node Q, the third characteristic value can be obtained directly by searching for relevant information of data files stored in the fourth network node Q without the need of obtaining the third characteristic value by calculation.

Further, when the fourth network node Q finds that the matching data file does not have a first position, the fourth network node Q can determine that the data file to be transmitted does not exist and then may send information indicating that the data file does not exist to the third network node P.
**S604:** The fourth network node Q determines whether the second characteristic value matches the third characteristic value of the file block at the corresponding position, and determines whether the data file exists based on the matching result.

When there is only one first position and one second characteristic value corresponding to a file block at the first position, that is, only one file block needs to be matched, it is only required to determine whether a second characteristic value of the file block matches a third characteristic value of a selected file block in the local matching data file. If the second characteristic value matches the third characteristic value, that is, the second characteristic value is the same as the third characteristic value, it is confirmed that the data file exists, and if the second characteristic value does not match the third characteristic value, that is, the second characteristic value is different from the third characteristic value, it is confirmed that the data file does not exist.

Further, when there are multiple first positions and multiple second characteristic values corresponding to file blocks at the first positions, that is, multiple file blocks need to be matched, the fourth network node Q needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.

Further, the fourth network node Q may return information indicating whether the data file exists to the third network node P.

It can be seen that according to the sixth embodiment disclosed above, matching is performed for a first identifier of a data file to be searched; and then according to a first position, a third characteristic value of a file block at a corresponding position is obtained from a matching data file; and the third characteristic value is further matched with a second characteristic value; even if the first identifier may have a collision, i.e., the same first identifier as that of the data file to be searched is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether the data file to be searched already exists can be accurately determined. As compared with current techniques, the accuracy of determining the existence of a data file is greatly improved.

Focused on a third network node in steps, the aforementioned sixth method embodiment may be described with respect to a seventh method embodiment that specifically includes the following steps: sending a request for a data file to a fourth network node, the request including a first identifier of the data file, a first position of a file block in the data file, and a second characteristic value corresponding to the file block at the first position. Further, information, returned by the fourth network node, indicating whether the data file exists is received.

It can be seen that according to the aforementioned embodiment, whether the data file already exists can be accurately determined by sending a first identifier of a data file to be searched, a first position of a file block in the data file, and a second characteristic value corresponding to the file block at the first position to a network node used for searching for the data file. As compared with current techniques, the accuracy of determining the existence of a data file is greatly improved.

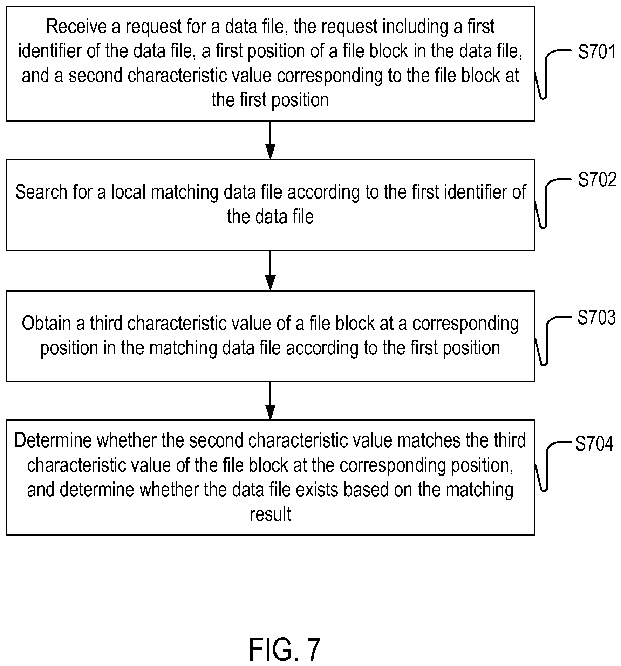

Focused on a fourth network node in steps, the aforementioned sixth method embodiment may be described with respect to an eighth method embodiment that, with reference to FIG. 7, specifically includes the following steps.
**S701:** Receive a request for a data file, the request including a first identifier of the data file, a first position of a file block in the data file, and a second characteristic value corresponding to the file block at the first position.
**S702:** Search for a local matching data file according to the first identifier of the data file.
**S703:** Obtain a third characteristic value of a file block at a corresponding position in the matching data file according to the first position.
**S704:** Determine whether the second characteristic value matches the third characteristic value of the file block at the corresponding position, and determine whether the data file exists based on the matching result.

Further, information indicating whether the data file exists is returned to a third network node.

It can be seen that according to the above-described embodiment, matching is performed for a first identifier of a data file to be searched; and then according to a first position, a third characteristic value of a file block at a corresponding position is obtained from a matching data file; and the third characteristic value is further matched with a second characteristic value, so that whether the data file to be searched for is already stored locally can be accurately determined. As compared with current techniques, the accuracy of determining the existence of a data file is greatly improved.

In some embodiments, for example, in a cloud storage scenario, a user needs to upload a data file to a cloud storage server, and if the data file to be uploaded by the user is already stored in the cloud server, the user does not need to repeatedly upload the data file, wasting of network resources, so it is required to first determine whether the data file already exists in the cloud storage server.

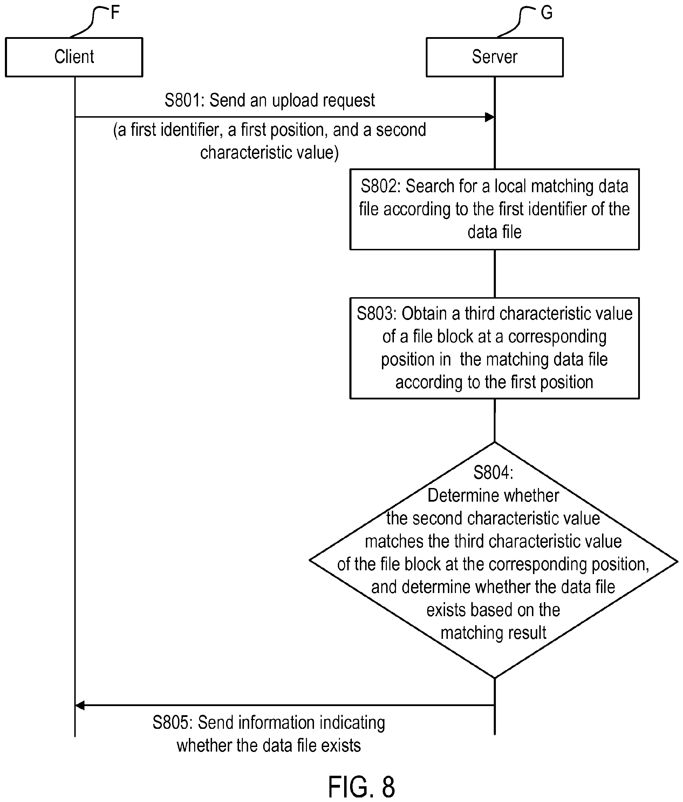

Applied to an upload scenario, the aforementioned sixth method embodiment may be described with respect to a ninth method embodiment that, with reference to FIG. 8, specifically includes the following steps.
**S801:** A client F sends an upload request for a data file to a server G, the upload request including a first identifier of the data file, a first position of a file block in the data file, and a second characteristic value corresponding to the file block at the first position.

The first identifier here may be at least one of a file name, a file size, and a first characteristic value, and in one embodiment, includes at least the first characteristic value. The first characteristic value refers to an overall characteristic value of the data file to be uploaded, and the second characteristic value refers to a characteristic value of a file block in the data file to be uploaded. In one embodiment, the characteristic value may be a Message Digest 5 (MD5) value.

Before sending a request for a data file to the server G, the client F needs to calculate a first characteristic value and a second characteristic value of the data file. The characteristic values calculated by the client F may be of the same type as that of characteristic values of data files stored in the server G, or may be other selected characteristic values.

The selection and use of a characteristic value of the same type as that of characteristic values of data files stored in the server G can prevent the server G from recalculating new characteristic values for stored data due to the need of switching to other characteristic values used by the client F.

In one embodiment, the first position of the file block may be a starting position and an ending position of the file block in the data file to which the file block belongs, or may be a starting position of the file block in the data file to which the file block belongs and a length of the file block. The first position of the file block may be obtained by designation, or may be obtained by calculation using a random algorithm.

The number of the first positions of the file blocks is greater than or equal to 1 and is less than or equal to the total number of blocks that the data file to be transmitted can be divided into. That is, the request may carry a first position of one file block or positions of multiple file blocks.
**S802:** The server G searches for a local matching data file according to the first identifier of the data file.

When the server G receives the first identifier of the data file sent by the client F, the server G acquires first identifiers of local data files, wherein the first identifiers may be acquired by calculation, or may be obtained by searching for relevant information of locally stored data files. Then, a search for a local data file matching the first identifier is conducted.

In some embodiments, when a matching data file cannot be found, the server G can determine that the data file to be transmitted by the client F does not exist locally, and the server G may return information indicating that the data file does not exist to the client F.
**S803:** The server G obtains a third characteristic value of a file block at a corresponding position in the matching data file according to the first position.

In some embodiments, when the server G finds a matching data file locally, if there is only one matching data file, it is only required to find a first position from this matching data file, and acquire a third characteristic value of a file block at the first position by calculation. When there are multiple matching data files, it is required to find a first position from each matching data file and acquire third characteristic values of file blocks at the first positions by calculation.

Further, in a distributed storage scenario, a data file is divided into blocks and stored in the server G in the form of file blocks, and all file blocks, except the last file block, have the same size, and the size of the last file block is required to be less than or equal to that of the other file blocks. The server G stores relevant information of a stored data file, for example, a file name, an overall characteristic value, a file size, and a file structure table of the data file, where the file structure table sequentially stores all file block structure tables of the data file, and each file block structure table includes: a file block identifier, a preceding file block identifier, a succeeding file block identifier, a file block starting position, a file block length, and a file block characteristic value. When the characteristic value in the request is consistent with characteristic values in the server G, and the first position of the file block in the data file is consistent with length information of file blocks in the server G, the third characteristic value can be obtained directly by searching for relevant information of data files stored in the server G without the need of obtaining the third characteristic value by calculation.

Further, when the server G finds that the matching data file does not have a first position, the server G can determine that the data file to be transmitted does not exist and then may send information indicating that the data file does not exist to the client F.
**S804:** The server G determines whether the second characteristic value matches the third characteristic value of the file block at the corresponding position, and determines whether the data file exists based on the matching result.

When there is only one first position and one second characteristic value corresponding to a file block at the first position, that is, only one file block needs to be matched, it is only required to determine whether a second characteristic value of the file block matches a third characteristic value of a selected file block in the local matching data file. If the second characteristic value matches the third characteristic value, that is, the second characteristic value is the same as the third characteristic value, it is confirmed that the data file exists, and if the second characteristic value does not match the third characteristic value, that is, the second characteristic value is different from the third characteristic value, it is confirmed that the data file does not exist.

Further, when there are multiple first positions and multiple second characteristic values corresponding to file blocks at the first positions, that is, multiple file blocks need to be matched, the server G needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.
**S805:** The server G returns information indicating whether the data file exists to the client F.

Further, when the data file exists, it indicates that the upload is successful. When the data file does not exist, the flow enters a Create Upload scenario.

It can be seen that according to the embodiments disclosed above, during uploading of a data file, matching is performed for a first identifier of the data file to be uploaded, and then according to a first position, a third characteristic value of a file block at a corresponding position is obtained from a matching data file, and the third characteristic value is further matched with a second characteristic value, so that even if the first identifier may have a collision, that is, a first identifier the same as that of the data file to be transmitted is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether the data file to be uploaded already exists can be accurately determined. The problem of loss of a data file caused by misjudgment that the data file already exists to cancel upload in an upload scenario due to the weak anti-collision performance of a characteristic value of the data file is effectively solved; as compared with current techniques, the accuracy of determining the existence of a data file is greatly improved, and the effectiveness and security of data file transmission are ensured.

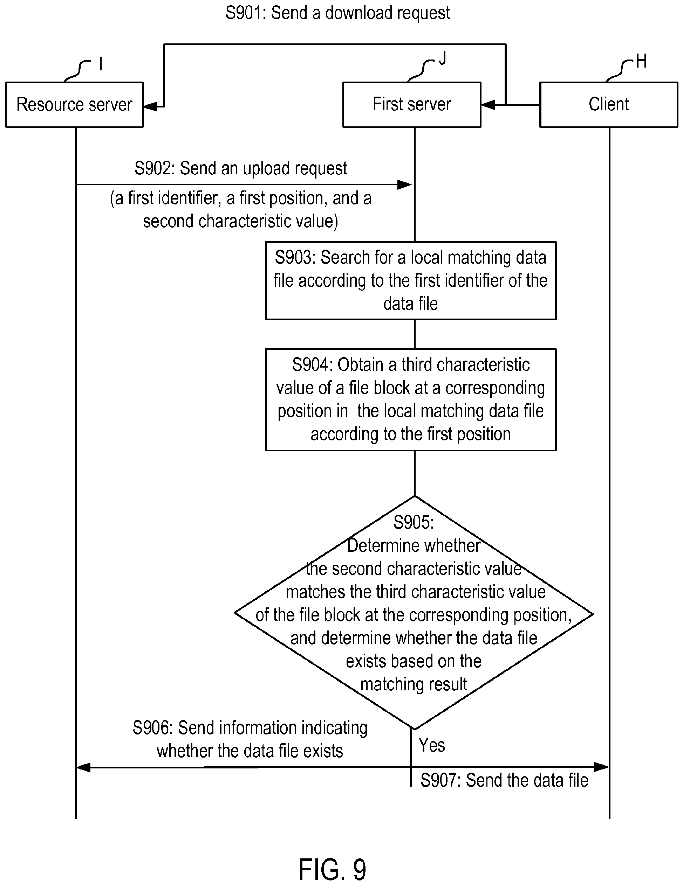

Applied to a download scenario, the aforementioned sixth method embodiment may be described with respect to a tenth method embodiment that, with reference to FIG. 9, specifically includes the following steps.
**S901:** A client H sends a download request.

In some embodiments, a second server J is equivalent to an acceleration server of a resource server I, the client H may send a download request to the resource server I, or may send a download request to the second server J. Once the client H sends a download request to the resource server I or the second server J, the resource server I can identify a file to be downloaded by the client H and the method proceeds to S902.

**S902:** The resource server I sends an upload request for a data file to the second server J, the upload request including a first identifier of the data file, a first position of a file block in the data file, and a second characteristic value corresponding to the file block at the first position.

The first identifier here may be at least one of a file name, a file size, and a first characteristic value, and in one embodiment, includes at least the first characteristic value. The first characteristic value refers to an overall characteristic value of the data file to be uploaded, and the second characteristic value refers to a characteristic value of a file block in the data file to be uploaded. In one embodiment, the characteristic value may be a Message Digest 5 (MD5) value.

Before sending a request for a data file to the second server J, the resource server I needs to obtain a first characteristic value and a second characteristic value of the data file, where the characteristic values may be obtained by calculation, or may be obtained directly from relevant information of locally stored data files, and the characteristic values obtained by the resource server I may be of the same type as that of characteristic values of data files stored in the second server J, or may be other selected characteristic values.

The selection and use of a characteristic value of the same type as that of characteristic values of data files stored in the second server J can prevent the second server J from recalculating new characteristic values for stored data due to the need of switching to other characteristic values used by the resource server I.

In one embodiment, the first position of the file block may be a starting position and an ending position of the file block in the data file to which the file block belongs, or may be a starting position of the file block in the data file to which the file block belongs and a length of the file block. The first position of the file block may be obtained by designation, or may be obtained by calculation using a random algorithm.

The number of the first positions of the file blocks is greater than or equal to 1 and is less than or equal to the total number of blocks that the data file to be transmitted can be divided into. That is, the request may carry a first position of one file block or positions of multiple file blocks.
**S903:** The second server J searches for a local matching data file according to the first identifier of the data file.

When the second server J receives the first identifier of the data file that is sent by the resource server I, the second server J acquires first identifiers of local data files, where the first identifiers may be acquired by calculation, or may be obtained by searching for relevant information of locally stored data files. Then, a search for a local data file matching the first identifier is conducted.

In some embodiments, when a matching data file cannot be found, the second server J can determine that the data file to be transmitted by the resource server I does not exist locally, and the second server J may return information indicating that the data file does not exist to the resource server I.
**S904:** The second server J obtains a third characteristic value of a file block at a corresponding position in the matching data file according to the first position.

In some embodiments, when the second server J finds a matching data file locally, if there is only one matching data file, it is only required to find a first position from this matching data file, and acquire a third characteristic value of a file block at the first position by calculation. When there are multiple matching data files, it is required to find a first position from each matching data file and acquire third characteristic values of file blocks at the first positions by calculation.

Further, in a distributed storage scenario, a data file is divided into blocks and stored in the second server J in the form of file blocks, and all file blocks, except the last file block, have the same size, and the size of the last file block is required to be less than or equal to that of the other file blocks. The second server J stores relevant information of a stored data file, for example, a file name, an overall characteristic value, a file size, and a file structure table of the data file, where the file structure table sequentially stores all file block structure tables of the data file, and each file block structure table includes: a file block identifier, a preceding file block identifier, a succeeding file block identifier, a file block starting position, a file block length, and a file block characteristic value. When the characteristic value in the request is consistent with characteristic values in the second server J, and the first position of the file block in the data file is consistent with length information of file blocks in the second server J, the third characteristic value can be obtained directly by searching for relevant information of data files stored in the second server J without the need of obtaining the third characteristic value by calculation.

Further, when the second server J finds that the matching data file does not have a first position, the second server J can determine that the data file to be transmitted does not exist and then may send information indicating that the data file does not exist to the resource server I.
**S905:** The second server J determines whether the second characteristic value matches the third characteristic value of the file block at the corresponding position, and determines whether the data file exists based on the matching result.

When there is only one first position and one second characteristic value corresponding to a file block at the first position, that is, only one file block needs to be matched, it is only required to determine whether a second characteristic value of the file block matches a third characteristic value of a selected file block in the local matching data file. If the second characteristic value matches the third characteristic value, that is, the second characteristic value is the same as the third characteristic value, it is confirmed that the data file exists, and if the second characteristic value does not match the third characteristic value, that is, the second characteristic value is different from the third characteristic value, it is confirmed that the data file does not exist.

Further, when there are multiple first positions and multiple second characteristic values corresponding to file blocks at the first positions, that is, multiple file blocks need to be matched, the second server J needs to determine whether second characteristic values of all the file blocks match third characteristic values of selected file blocks in the local matching data file. If one of the second characteristic values does not match the third characteristic value, it is determined that the data file does not exist; and if all the second characteristic values match the third characteristic values, it is determined that the data file exists.

Further, if the second server J determines that the data file does not exist locally, the second server J returns information indicating that the data file does not exist to the resource server I.
**S906:** The second server J returns information indicating that the data file exists to the resource server I.
**S907:** The second server J sends the data file to the client H.

It can be seen that according to aforementioned embodiments, during downloading of a data file, a first identifier of a data file to be transmitted, a first position of a file block in the data file, and a second characteristic value corresponding to the file block at the first position are sent to a network node the data file is to be transmitted to, matching is performed for the first identifier, and then, further matching is performed for a third characteristic value corresponding to a first position in a matching data file, so that even if the first identifier may have a collision, that is, a first identifier the same as that of the data file to be transmitted is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether a data file to be transmitted is already stored in a network node that intends to transmit the data file can be accurately determined. The problem that a user downloads malicious software due to misjudgment that a data file is a data file to be downloaded by the user in a download scenario of the user is effectively solved. As compared with current techniques, the accuracy of determining the existence of a data file is greatly improved, and the effectiveness and security of data file transmission are ensured.

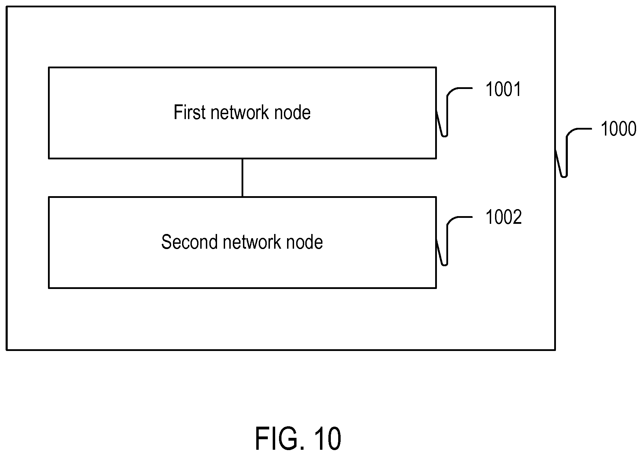

A first embodiment of a system for determining the existence of a data file corresponding to the aforementioned first method embodiment may be shown in FIG. 10.

The system 1000 includes a first network node 1001, configured to send a request for a data file to a second network node, the request including a first identifier of the data file; select, according to a first position of a file block sent by the second network node, a file block at a corresponding position from the data file to be transmitted, and calculate a second characteristic value of the selected file block; and send the second characteristic value of the file block to the second network node; and

The system 1000 includes the second network node 1002, configured to search for a local matching data file according to the first identifier of the data file in the request sent by the first network node, select a file block from the matching data file, and acquire a first position of the selected file block; send the first position to the first network node; and determine, according to the second characteristic value sent by the first network node, whether the second characteristic value matches a third characteristic value of the file block selected from the local matching data file, and determine whether the data file exists based on the matching result.

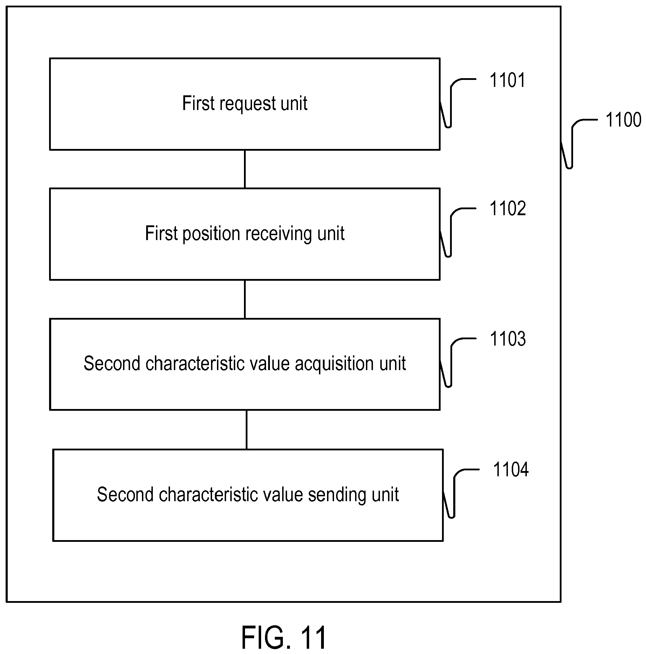

A first embodiment of an apparatus for determining the existence of a data file corresponding to the aforementioned second method embodiment may be shown in FIG. 11.

The apparatus 1100 includes a first request unit 1101, configured to send a request for a data file to a second network node, the request including a first identifier of the data file;

The apparatus 1100 includes a first position receiving unit 1102, configured to receive a first position sent by the second network node;

The apparatus 1100 includes a second characteristic value acquisition unit 1103, configured to select a file block at a corresponding position from the data file according to the first position, and calculate a second characteristic value of the selected file block; and

The apparatus 1100 includes a second characteristic value sending unit 1104, configured to send the second characteristic value to the second network node.

Further, the apparatus further includes: a first feedback information receiving unit, configured to receive information, returned by the second network node, indicating whether the data file exists.

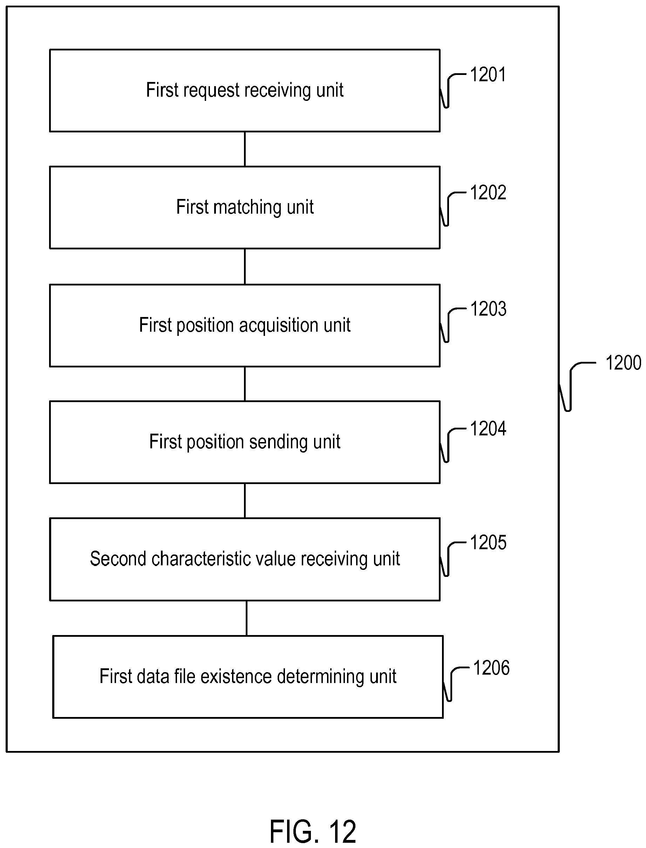

A second embodiment of an apparatus for determining the existence of a data file corresponding to the aforementioned third method embodiment may be shown in FIG. 12.

The apparatus 1200 includes a first request receiving unit 1201, configured to receive a request for a data file sent by a first network node, the request including a first identifier of the data file;

The apparatus 1200 includes a first matching unit 1202, configured to search for a local matching data file according to the first identifier of the data file;

The apparatus 1200 includes a first position acquisition unit 1203, configured to select a file block from the matching data file, and acquire a first position of the selected file block;

The apparatus 1200 includes a first position sending unit 1204, configured to send first positions of all the selected file blocks to the first network node;

The apparatus 1200 includes a second characteristic value receiving unit 1205, configured to receive a second characteristic value of a file block sent by the first network node; and

The apparatus 1200 includes a first data file existence determining unit 1206, configured to determine whether the second characteristic value matches a third characteristic value of the selected file block in the local matching data file, and determine whether the data file exists based on the matching result.

Further, the apparatus further includes: a first information feedback unit, configured to return information indicating whether the data file exists to the first network node.

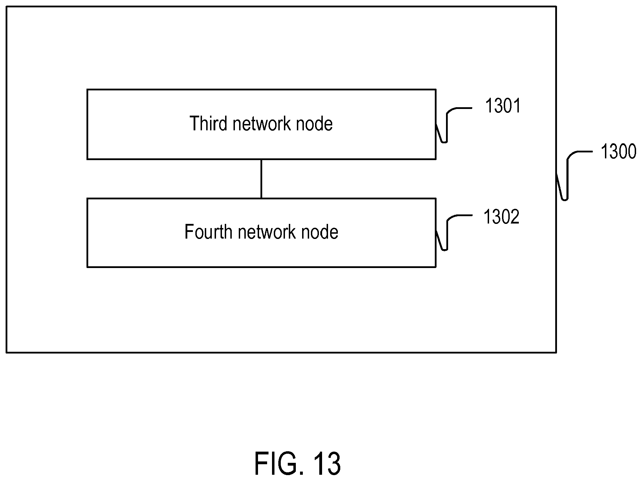

A second embodiment of a system for determining the existence of a data file corresponding to the aforementioned sixth method embodiment may be shown in FIG. 13.

The system 1300 includes a third network node 1301, configured to send a request for a data file to a fourth network node, the request including a first identifier of the data file, a first position of a file block in the data file, and a second characteristic value corresponding to the file block at the first position; and

The system 1300 includes a fourth network node 1302, configured to search for a local matching data file according to the first identifier of the data file; then obtain a third characteristic value of a file block at a corresponding position in the matching data file according to the first position; and determine whether the second characteristic value matches the third characteristic value of the file block at the corresponding position, and determine whether the data file exists based on the matching result.

A third embodiment of an apparatus for determining the existence of a data file corresponding to the aforementioned seventh method embodiment includes: a second request unit, configured to send a request for a data file to a fourth network node, the request including a first identifier of the data file, a first position of a file block in the data file, and a second characteristic value corresponding to the file block at the first position.

Further, the apparatus further includes: a second feedback information receiving unit, configured to receive information, returned by the fourth network node, indicating whether the data file exists.

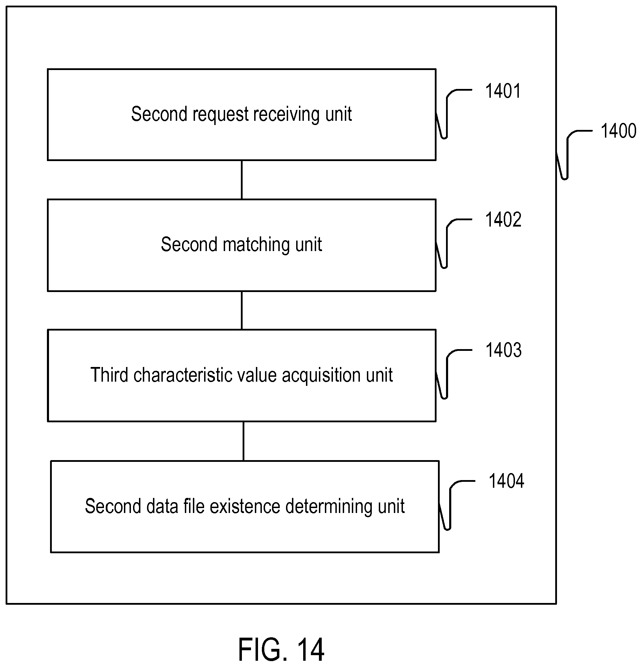

A fourth embodiment of an apparatus for determining the existence of a data file corresponding to the aforementioned eighth method embodiment may be shown in FIG. 14.

The apparatus 1400 includes a second request receiving unit 1401, configured to receive a request for a data file, the request including a first identifier of the data file, a first position of a file block in the data file, and a second characteristic value corresponding to the file block at the first position;

The apparatus 1400 includes a second matching unit 1402, configured to search for a local matching data file based on the first identifier of the data file;

The apparatus 1400 includes a third characteristic value acquisition unit 1403, configured to obtain a third characteristic value of a file block at a corresponding position in the matching data file according to the first position; and

The apparatus 1400 includes a second data file existence determining unit 1404, configured to determine whether the second characteristic value matches the third characteristic value of the file block at the corresponding position, and determine whether the data file exists based on the matching result.

Further, the apparatus further includes: a second information feedback unit, configured to return information indicating whether the data file exists to a third network node.

It can be seen that according to the method, apparatus, and system for determining the existence of a data file provided in embodiments, matching is performed for a first identifier of a data file to be searched; and then a third characteristic value of a file block corresponding to a first position is selected from a matching data file and is further matched with a second characteristic value, so that even if the first identifier may have a collision, i.e., the same first identifier as that of the data file to be searched for is forged, the probability of having a collision again in the colliding data file and painstakingly forging the same characteristic value of file blocks is greatly reduced. Moreover, a starting position and a file block length of a file block are unpredictable, so the probability of successfully forging position information and corresponding characteristic values of all selected file blocks is extremely low. Therefore, whether the data file already exists can be accurately determined. In some embodiments, the technical solutions provided in the disclosed embodiments not only can accurately determine that a data file already exists to avoid waste of network resources caused by repeated transmission, but also can avoid loss of a data file caused by misjudgment that the data file already exists to cancel upload in an upload scenario due to the weak anti-collision performance of the data file; or avoid the problem that a user downloads malicious software due to misjudgment that a data file is software to be downloaded in a download scenario. As compared with current techniques, the accuracy of determining the existence of a data file is greatly improved.

In the 1990s, whether a technical improvement is a hardware improvement (for example, an improvement on a circuit structure such as a diode, a transistor, or a switch) or a software improvement (an improvement on a method and process) may be differentiated clearly. However, along with the development of technologies, nowadays many improvements on methods and processes may be regarded as direct improvements on hardware circuit structures. Almost all the designers program an improved method and process into a hardware circuit to obtain a corresponding hardware circuit structure. Therefore, it cannot be said that an improvement on a method and process cannot be implemented by a hardware entity module. For example, a Programmable Logic Device (PLD) (for example, a Field Programmable Gate Array (FPGA)) is such an integrated circuit whose logic function is determined by device programming of a user. The designers may program by themselves to "integrate" a digital system with a PLD, and there is no need to ask a chip manufacturer to design and manufacture an application specific integrated circuit chip 2. Furthermore, instead of manually manufacturing an integrated circuit chip, such programming is often implemented by "logic compiler" software, which is similar to a software compiler used in program development and writing, and before compiling, original codes may also be written in a particular programming language, which is referred to as a Hardware Description Language (HDL). There is not only one type of HDL but also a plurality of types of HDLs, for example, ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), and the like, among which VHDL (Very-High-Speed Integrated Circuit Hardware Description Language) and Verilog2 are most commonly used nowadays. Those skilled in the art should also understand that a hardware circuit for implementing a logic method and process may be easily obtained by programming such a method and process into an integrated circuit with a logical programming and above hardware description languages.

A controller may be implemented in any suitable manner. For example, the controller may use the form of a microprocessor or processor and a computer-readable medium that stores computer-readable program codes (for example, software or firmware) executable by the (micro)processor, logic gates, switches, an Application Specific Integrated Circuit (ASIC), a programmable logic controller, and an embedded microcontroller. The examples of controllers include, but are not limited to the following microcontrollers: ARC 625D, Atmel AT91SAM, Microchip PIC18F26K20, and Silicon Labs C8051F320. The memory controller may also be implemented as part of the memory control logic.

Those skilled in the art also know that, in addition to implementing a controller by pure computer-readable program codes, with a logic programming of method or steps, the controller may realize the same function in the form of a logic gate, a switch, an application specific integrated circuit, a programmable logic controller, an embedded microcontroller, or the like. Therefore, such a controller may be regarded as a hardware component, and its apparatus for realizing various functions may be regarded as an internal structure of the hardware component. The apparatus for realizing various functions may even be regarded either as a software module for realizing a method or an internal structure of a hardware component.

The system, apparatus, module, or unit illustrated in the above embodiments may be specifically implemented by a computer chip or an entity, or a product with a certain function.

For the sake of convenient description, the above apparatuses are functionally divided into various units which are separately described. Certainly, when implementing the disclosed embodiments, the functions of various units may be implemented in one or more instances of software and/or hardware.

By the preceding description of the embodiments, those skilled in the art may clearly understand that the disclosed embodiments may be implemented by software plus a necessary general hardware platform. Based on such understanding, the substance of the technical solutions of the disclosure, or the portion of the disclosure that makes contribution to the prior art, may be embodied in the form of a software product. In a typical configuration, a computing device includes one or more processors (CPUs), input/output interfaces, network interfaces, and a memory. The computer software product may contain several instructions enabling a computer device (which may be a personal computer, a server, a network device, or the like) to execute the methods described in the embodiments or part of the embodiments of the disclosure. The computer software product may be stored in a memory. The memory may include a computer-readable medium in the form of a non-permanent memory, a random access memory (RAM) and/or a non-volatile memory or the like, such as a read-only memory (ROM) or a flash memory (flash RAM). The memory is an example of a computer-readable medium. The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase-change memory (PRAM), a static random access memory (SRAM), a dynamic random access memory (DRAM) or other types of random access memories (RAMs), a read-only memory (ROM), an electrically erasable programmable read-only memory (EEPROM), a flash memory or other memory technologies, a read-only compact disc read-only memory (CD-ROM), a digital versatile disk (DVD) or other optical storages, a magnetic cassette, a magnetic tape, a magnetic disk storage or other magnetic storage devices, or any other non-transmission medium that can be used for storing information accessible by a computing device. In light of the definitions herein, the computer-readable medium does not include transitory computer-readable media (transitory media), such as modulated data signals and carrier waves.

The embodiments in this specification are described in a progressive manner, and for identical or similar parts between different embodiments, reference may be made to each other so that each of the embodiments focuses on differences from other embodiments. Especially, the system embodiment is described relatively briefly because it is substantially similar to the method embodiments, and for related parts, reference may be made to the method embodiments.

The disclosed embodiments may be used in an environment or in a configuration of universal or specialized computer systems. Examples include: a personal computer, a server computer, a handheld device or a portable device, a tablet device, a multi-processor system, a microprocessor-based system, a set-up box, a programmable customer electronic device, a network PC, a small-scale computer, a large-scale computer, and a distributed computing environment including any system or device above.

The disclosed embodiments may be described in a general context of computer-executable instructions executed by a computer, such as a program module. Generally, a program module includes routines, programs, objects, modules, data structure, and so on, for executing particular tasks or implementing particular abstract data types. The disclosed embodiments may also be implemented in a distributed computing environment. In the distributed computing environment, a task is executed by remote processing devices that are connected through a communication network. In a distributed computing environment, the program module may be located in storage media, which include storage devices, of local and remote computers.

Although the disclosed embodiments are described through the embodiments, those of ordinary skill in the art know that the disclosure may be modified and variations may be made without departing from the spirit of the disclosure. It is intended that the appended claims include these modifications and variations without departing from the spirit of the disclosure.

## Claims

1. A method of determining the existence of a data file, comprising:
sending, from a first network node to a second network node, a request for a data file, the request comprising a first identifier of the data file;
searching, by the second network node based on the first identifier of the data file, for locally matched data files;
selecting, from the locally matched data files, a file block, and acquiring a first position of the file block;
sending, from the second network node to the first network node, the first position;
selecting, by the first network node based on the first position, a corresponding file block from the data file, and calculating a second characteristic value of the selected file block;
sending, from the first network node to the second network node, the second characteristic value; and
determining, by the second network node, if the second characteristic value matches with a third characteristic value of the selected file block, and, if so, determining the data file exists.

2. The method for determining the existence of a data file according to claim 1, further comprising returning, by the second network node, information indicating whether the data file exists to the first network node.

3. A method for determining the existence of a data file, comprising:
sending a request for a data file to a second network node, the request including a first identifier of the data file;
receiving a first position sent by the second network node;
selecting a file block at a corresponding position from the data file according to the first position, and calculating a second characteristic value of the selected file block; and
sending the second characteristic value to the second network node.

4. The method for determining the existence of a data file according to claim 3, further comprising receiving information, returned by the second network node, indicating whether the data file exists.

5. A method for determining the existence of a data file, comprising:
receiving a request for a data file sent by a first network node, the request including a first identifier of the data file;
searching for a local matching data file according to the first identifier of the data file;
selecting a file block from the local matching data file, and acquiring a first position of the selected file block;
sending the first position to the first network node;
receiving a second characteristic value of a file block sent by the first network node; and
determining whether the second characteristic value matches a third characteristic value of the selected file block, and determining whether the data file exists based on the matching result.

6. A method for determining the existence of a data file, comprising:
sending, by a third network node, a request for a data file to a fourth network node, the request including a first identifier of the data file, a first position of a file block in the data file, and a second characteristic value corresponding to the file block at the first position;
searching for, by the fourth network node, a local matching data file according to the first identifier of the data file;
calculating, by the fourth network node, a third characteristic value of a file block at a corresponding position in the local matching data file according to information of the first position; and
determining, by the fourth network node, whether the second characteristic value matches the third characteristic value of the file block at the corresponding position, and determining whether the data file exists based on the matching result.

7. The method for determining the existence of a data file according to claim 6, further comprising: returning, by the fourth network node, information indicating whether the data file exists to the third network node.

8. A method for determining the existence of a data file, comprising sending a request for a data file to a fourth network node, the request including a first identifier of the data file, a first position of a file block in the data file, and a second characteristic value corresponding to the file block at the first position.

9. The method for determining the existence of a data file according to claim 8, further comprising receiving information, returned by the fourth network node, indicating whether the data file exists.

10. A method for determining the existence of a data file, comprising:
receiving a request for a data file, the request including a first identifier of the data file, a first position of a file block in the data file, and a second characteristic value corresponding to the file block at the first position;
searching for a local matching data file according to the first identifier of the data file;
obtaining, from the local matching data file, a third characteristic value of a file block at a corresponding position according to information of the first position; and
determining whether the second characteristic value matches the third characteristic value of the file block at the corresponding position, and determining whether the data file exists based on the matching result.

11. The method for determining the existence of a data file according to claim 10, further comprising:
returning information indicating whether the data file exists to a third network node.

12. The method for determining the existence of a data file according to claim 11, further comprising:
returning information indicating whether the data file exists to the third network node.

13. The method for determining the existence of a data file according to any one of claims 1 to 12, wherein the first identifier comprises at least one of a file name, a file size, and a first characteristic value.

14. The method for determining the existence of a data file according to any one of claims 1 to 12, wherein the first position of the file block comprises a first position of the file block obtained by designation.

15. The method for determining the existence of a data file according to any one of claims 1 to 12, wherein the first position of the file block further comprises a first position of the file block obtained by calculation using a random algorithm.

16. The method for determining the existence of a data file according to any one of claims 1 to 12, wherein the first position of the file block comprises a starting position and an ending position of the file block in the data file, or a starting position and a length of the file block in the data file.

17. A system for determining the existence of a data file, comprising:
a first network node, configured to:
send a request for a data file to a second network node, the request including a first identifier of the data file,
select, according to a first position of a file block sent by the second network node, a file block at a corresponding position from the data file to be transmitted, and calculate a second characteristic value of the selected file block, and
send the second characteristic value of the file block to the second network node; and
the second network node, configured to:
search for a local matching data file according to the first identifier of the data file in the request sent by the first network node,
select a file block from the local matching data file, and acquire a first position of the selected file block,
send the first position to the first network node, and
determine, according to the second characteristic value sent by the first network node, whether the second characteristic value matches a third characteristic value of the selected file block, and determine whether the data file exists based on the matching result.

18. An apparatus for determining the existence of a data file, comprising:
a first request unit, configured to send a request for a data file to a second network node, the request including a first identifier of the data file;
a first position receiving unit, configured to receive a first position sent by the second network node;
a second characteristic value acquisition unit, configured to select a file block at a corresponding position from the data file according to the first position, and calculate a second characteristic value of the selected file block; and
a second characteristic value sending unit, configured to send the second characteristic value to the second network node.

19. The apparatus for determining the existence of a data file according to claim 18, further comprising a first feedback information receiving unit, configured to receive information, returned by the second network node, indicating whether the data file exists.

20. An apparatus for determining the existence of a data file, comprising:
a first request receiving unit, configured to receive a request for a data file sent by a first network node, the request including a first identifier of the data file;
a first matching unit, configured to search for a local matching data file based on the first identifier of the data file;
a first position acquisition unit, configured to select a file block from the local matching data file, and acquire a first position of the selected file block;
a first position sending unit, configured to send first positions of all the selected file blocks to the first network node;
a second characteristic value receiving unit, configured to receive a second characteristic value of a file block sent by the first network node; and
a first data file existence determining unit, configured to determine whether the second characteristic value matches a third characteristic value of the selected file block file, and determine whether the data file exists based on the matching result.

21. The apparatus for determining the existence of a data file according to claim 20, further comprising a first information feedback unit, configured to return information indicating whether the data file exists to the first network node.

22. A system for determining the existence of a data file, comprising:
a third network node, configured to send a request for a data file to a fourth network node, the request including a first identifier of the data file, a first position of a file block in the data file, and a second characteristic value corresponding to the file block at the first position; and
the fourth network node, configured to search for a local matching data file according to the first identifier of the data file; then obtain a third characteristic value of a file block at a corresponding position in the local matching data file according to the first position; and determine whether the second characteristic value matches the third characteristic value of the file block at the corresponding position, and determine whether the data file exists based on the matching result.

23. An apparatus for determining the existence of a data file, comprising:
a second request unit, configured to send a request for a data file to a fourth network node, the request including a first identifier of the data file, a first position of a file block in the data file, and a second characteristic value corresponding to the file block at the first position.

24. The apparatus for determining the existence of a data file according to claim 23, further comprising a second feedback information receiving unit, configured to receive information, returned by the fourth network node, indicating whether the data file exists.

25. An apparatus for determining the existence of a data file, comprising:
a second request receiving unit, configured to receive a request for a data file, the request including a first identifier of the data file, a first position of a file block in the data file, and a second characteristic value corresponding to the file block at the first position;
a second matching unit, configured to search for a local matching data file based on the first identifier of the data file;
a third characteristic value acquisition unit, configured to obtain a third characteristic value of a file block at a corresponding position in the local matching data file according to the first position; and
a second data file existence determining unit, configured to determine whether the second characteristic value matches the third characteristic value of the file block at the corresponding position, and determine whether the data file exists based on the matching result.

26. The apparatus for determining the existence of a data file according to claim 25, further comprising a second information feedback unit, configured to return information indicating whether the data file exists to a third network node.
